# EUROPEAN PATENT APPLICATION

(11) **EP 1 076 205 A1**
(43) Date of publication of application: **14.02.2001**
(21) Application number: 00306882.2
(22) Date of filing: 11.08.2000
(51) Int. Cl.: F21V 8/00

(54) **Edgelit display panel assembly**

(30) Priority: 11.08.1999 GB 9918821
(71) Applicant: Signwaves Ltd, Great Yarmouth Norfolk NR31 0NW (GB)
(72) Inventor: Johnson, Patrick Thomas, c/o Signwaves Ltd., Great Yarmouth, Norfolk NR31 ONW (GB); John, David Nicholas, c/o Signwaves Ltd., Great Yarmouth, Norfolk NR31 ONW (GB)
(74) Representative: Coates, Ian Harold

(57) **Abstract**

An edgelit display panel assembly comprising a frame (30) supporting a light-diffusive plate (10) and an electric light source (20) or sources disposed along and closely adjacent to at least one edge of that plate (10) for illuminating the whole plate (10) and transmitting light through a major surface of the plate within the frame (30) in use, wherein at least the said one edge of the plate (10) has a light-receiving surface (13,14,15) that is inclined and/or that lies within a recess (12) formed in the edge of the plate (10). Preferably, the or each light source (13,14,15) extends, in the plane of the plate (10), at least partly over the light-receiving surface.

In an alternative assembly, the frame (30) comprises a hollow, open channel for accommodating electric circuit components for the electric light source (20), and the channel is closed, in use, by a removable elongate fascia panel connected by an elongate magnet and which preferably also serves to frame (30) the edge of the image-supporting substrate.

## Description

This invention relates to edgelit display panel assemblies.

Within the sign and display industry, 'edgelit' signs are commonplace. All edgelit units have the same fundamental components and method of working, i.e. a light source, commonly fluorescent tubes, arranged so as to throw light into the edge of a piece of clear acrylic. The acrylic may be engraved, surface decorated intentionally to create an illuminated feature as a result of the light travelling within the acrylic being controlled and allowed to escape selectively through or from around the decorated region.

A more recent development (within the past 4 years) brought about by the evolution of both acrylic materials and their surface treatments is the use of the 'edgelit' method to illuminate poster and transparency displays. In this case the light entering the edge of the acrylic is harnessed and used to throw a more even distribution of light to the rear (back) face of the poster or transparency. This method of illumination is seen to have the advantage of not requiring a lightbox, which may typically contain fluorescent tubes, gear trays and wiring, positioned behind the poster.

The size and depth of a lightbox is determined by the relative positioning of the constituent fluorescent tubes, reflector and diffuser. The ideal positioning is such that the light spread emitted from the lightbox is even and that 'hot spots' or 'tube grin' (betraying the position of the fluorescent tubes) does not occur. This would spoil the appearance of the illuminated display to the onlooker. The inevitable consequence of the traditional rear illuminating lightbox, as described, is bulk i.e. the necessary depth of the lightbox that occurs as a result of the cumulative depth of components in their correct relative positions. If an alternative method were available that achieved similar illumination of the display but did not need a lightbox to achieve it, the lightbox itself may be seen as undesirable and unnecessary.

The 'edgelit' method of achieving an illuminated display is a competent alternative and a number of designs have already entered the market place. These designs have achieved dimensional reductions over the traditional lightbox but the designs have been established around the most compact available electronic gear trays and fluorescent tubes in order to achieve the best possible dimensional reductions. The outcome of this is that the end designs are expensive and commercially handicapped as a result of the cumulative cost of components.

In order to achieve a commercially valid edgelit display product with real competitive advantage, it has been necessary to develop innovative design features which may be incorporated singularly or in combination to enable the use of commonly available components and to achieve the best possible economy of space materials and processing in the manufacture of the edgelit display.

The allocation of space within the perimeter frame, in which the unit's electrical components are concealed, and the choice of components are critical to the acceptability and performance of the end product. The invention also concerns this use of space, in manufacture and functionality in end use.

According to a first aspect of the present invention there is provided an edgelit display panel assembly comprising a frame supporting a light-diffusive plate and an electric light source or sources disposed along and closely adjacent to at least one edge of that plate for illuminating the whole plate and transmitting light through a major surface of the plate within the frame in use, wherein at least the said one edge of the plate has a light-receiving surface that is inclined and/or that lies within a recess formed in the edge of the plate, such that the light receiving edge(s) of the plate are so sized, shaped and configured so as to have a total light receiving surface area greater than that of a plate with conventional square cut edges.

This increase in surface area causes more light to be absorbed into the plate per unit edge length than in conventional edgelit displays. This in turn leads to a brighter illumination of the display material or the same illumination for less power usage.

Preferably, the or each light source extends, in the plane of the plate, at least partly into the footprint or projected area of the major surface of the light-diffusive plate. The "footprint" or "projected area" is the notional area formed by scribing around the outermost edge periphery of the plate. If one major surface is larger than the other then the footprint is the footprint of the larger major surface. Defined in other words, the or each light source extends, in the plane of the plate, at least partly over the light receiving surface.

By causing the light source to overlap with or be partly embedded in the edge of the plate the amount of light entering the light-receiving surface is increased for a fixed light source output.

According to a second aspect of the invention there is provided an edgelit display panel assembly comprising a frame supporting a light-diffusive plate and an electric light source or sources disposed along and closely adjacent to at least one edge of that plate for illuminating the whole plate and transmitting light through a major surface of the plate within the frame in use, wherein at least the said one edge of the plate has a light-receiving surface, and wherein the light source extends, in the plane of the plate, at least partly into the footprint or projected area of the major surface of the light-diffusive plate.

Preferably, in both the above inventions, the light-receiving surface, viewed in cross-section, is angled with respect to the normal to the plane of the plate.

The angled light-receiving surface may be provided by bevelling the edge or by forming a channel-shaped recess along the edge, or by providing separate spaced recesses along the edge, as claimed in the accompanying claims.

This arrangement allows the light sources to be located more inwardly of the assembly than has been possible with the conventional straight-cut edges to acrylic plates. Furthermore, the angle can be arranged to enhance the admission of light into the light-diffusive plate by reducing reflection and also by increasing total internal reflection inside the plate. Where the light source is located within or partly within a recess in the plate, the light transmission from the source to the plate can be improved still further by filling or partly filling the recess with a filler material such as a resin.

Thus the invention improves the compactness of the assembly, and also the efficiency of light transfer from the edge.

According to a further aspect of the present invention there is provided a frame supporting a light-diffusive back-plate, the back-plate arranged in use, to bear an image for display;
at least one elongate portion of the frame comprising a hollow, open channel for accommodating, in use, electric circuit components for an electric light source for edge-lighting the back-plate;
a removable elongate fascia panel for closing the said open channel;
and an elongate magnet between the fascia panel and the frame for magnetically retaining the fascia panel against the frame such that it is removable by pulling it in a direction normal to the plane of the frame and back-plate assembly.

Preferably, the fascia panel and frame each have edge channel formations which interengage to locate one against the other precisely and to prevent or resist their separation manually by levering with an inserted tool.

The magnet may be an elongate strip adhered to the frame or to the fascia panel or both.

Preferably, the fascia panel is shaped so as to extend inwardly in the plane of the assembly for framing the edge of an image-supporting substrate overlying the back-plate.

Preferably, the fascia panel has an elongate face, generally parallel to the plane of the assembly, for attachment, in use, to an edge of a glazing panel for covering the back-plate and superposed image-supporting substrate.

The fascia panel has the advantage of being removable for ready access to the light sources and associated electric circuit components, whilst covering the electric circuit components sufficiently securely to satisfy safety regulations. The interengagement between the fascia panel and the frame can be such that it is impossible or difficult to remove the fascia panel without a special tool. By arranging for the fascia panel to adhere to a glazing panel, the fascia is removable together with the glazing panel for servicing or for replacing the image-supporting substrate.

This aspect of the invention represents significant space saving in edgelit display panel assemblies, and also has advantages in simplicity and ease of manufacture.

The various aspects of the invention can of course be combined with the advantages of both inventions being preserved:
the frame is then arranged to support the or each light source which extends along or over the back-plate or light-diffusive plate at least partially; and
the light sources are electrically connected to the electric circuit components within the hollow frame.

In order that the inventions may be better understood, some examples will now be described with reference to the accompanying drawings, in which:
Figure 1 is a perspective view of a corner of an acrylic light-diffusive plate, together with two light sources;
Figures 2 to 6 are cross-sections through the top edge of an acrylic light-diffusive plate;
Figures 7 to 10 are perspective views corresponding to Figure 1 showing alternative ways of recessing the plate along the edge and alternative illumination methods;
Figure 11 is a cross-section through an edge of an edgelit display panel assembly;
Figure 12 is a different cross-sectional view of an edge of an edgelit display panel assembly, showing a cylindrical light source and frame members as shown in Figure 11;
Figure 13 is an exploded, partial perspective view of an edge of an edgelit display panel assembly corresponding to Figure 12;
Figures 14 and 15 are exploded cross-sectional views of the frame and fascia panel assembly of Figures 12 and 13, taken at different positions along the edge; and
Figure 16 is an illustration of an acrylic plate.

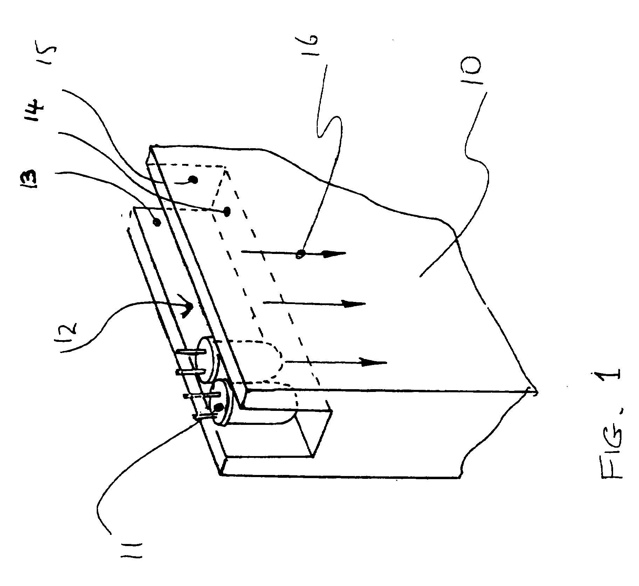

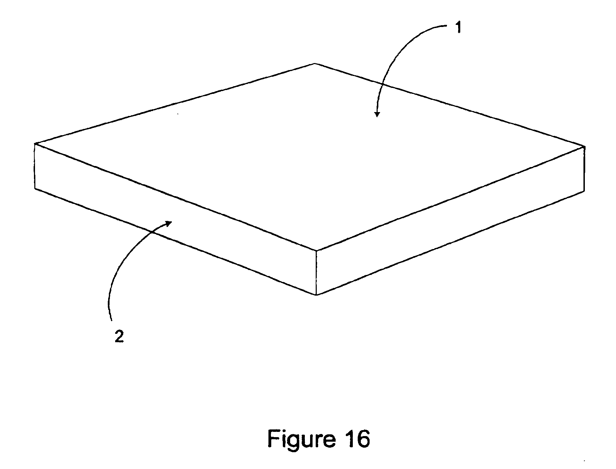

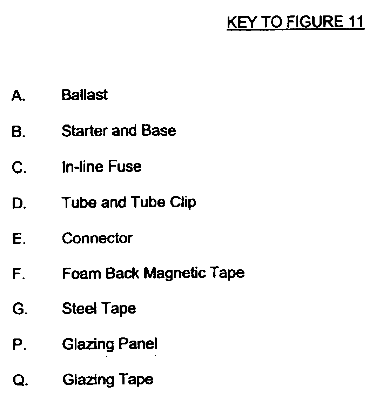

Conventional edgelit sign assemblies comprise an acrylic plate (Figure 16) or sheet having opposing major faces 1 and formed with a square edge 2, and framed with a metal frame which accommodates the electric lighting. The image to be displayed may be formed as an engraving in the plate or, more usually, is supported as a separate substrate over the acrylic plate, which acts as a light diffuser and conveys light from the edges through the main face and thus through the image to the viewer. The frame usually supports a glazing panel over the image-bearing substrate. It is current manufacturing practice for the diffusing plate or lens to be prepared along its edge, by diamond polishing or flame-edge polishing of the lens, perpendicular to its main surface, in order to provide good light entry. We have improved on this by inclining, angling or recessing at least one light-admitting surface along the edge, and examples are shown in Figures 1 to 10.

In Figure 1, a rectangular-section channel-shaped recess 12 in the acrylic plate 10 provides parallel-facing light-admitting surfaces 13 and 15 and, at right angles to those, a further light-admitting surface 14 which is normal to the plane of the panel assembly. Thus surfaces 13 and 15 are angled with respect to the normal to the plane of the plate. A row of light-emitting diodes or cold cathode light bulbs 11, of which two are shown in Figure 1, fills the recess 12 and directs light into the light-diffusing plate 10, as shown schematically by arrows 16. Light entering through surfaces 13 and 15 may be totally-internally reflected by other surfaces, and relatively little escapes through the edge to the outside.

These recesses are typically created by routing or drilling, although of course other methods are possible.

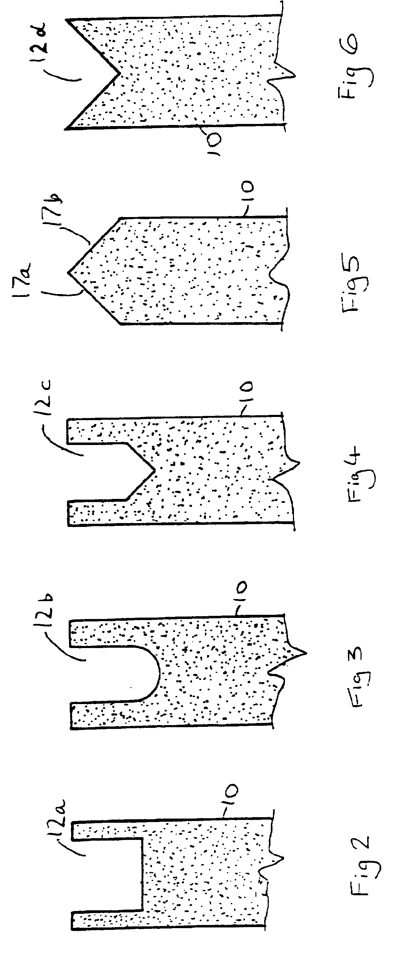

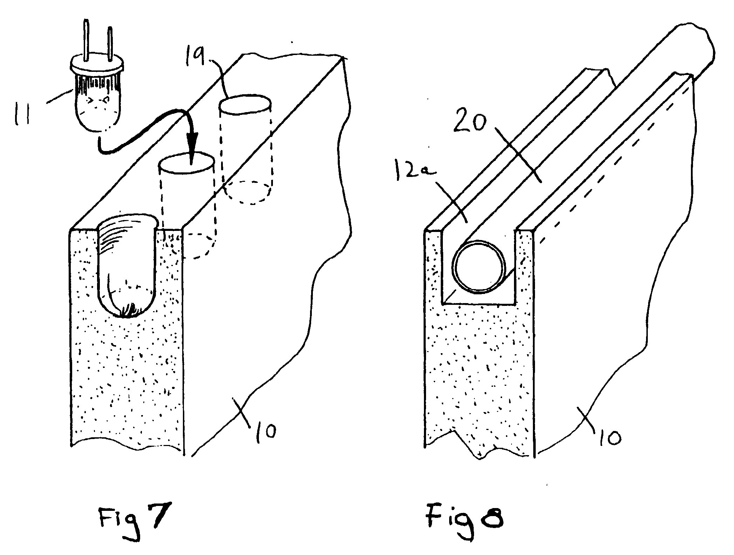

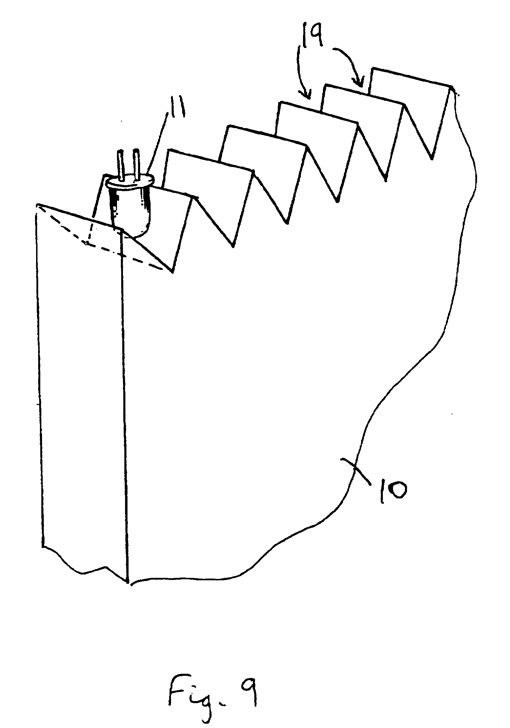

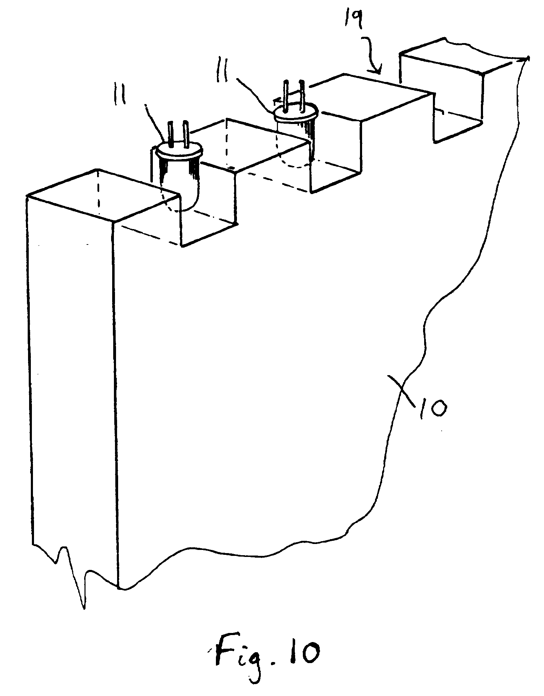

Figure 2 shows a square-section recess 12a. Figure 3 shows a U-shaped recess 12b. Figure 4 shows a polygonal recess 12c, which in this case has two vertical sides and two further sides inclined at about 45° and meeting at a line, all four surfaces being angled to the normal to the plane of the plate. Figure 5 shows a pair of bevelled edges 17a, 17b which meet at a line: alternatives would be possible with, for example, a flat surface connecting two bevelled surfaces or with just a single bevel. Figure 6 shows a notch-shaped recess 12d, the notch angle being about 90°, formed by two inclined surfaces each at about 45°.

The dual back edge of Figure 5 allows a single light source to illuminate both faces, and light-emitting diodes, fluorescent tubes or cold cathode tubes can be used. Single tubes bent into an 'n' shape could be used to illuminate both faces. The same principle could apply to the three-edge option, where a flat surface connects two bevelled surfaces.

These recesses may be continuous along the edge, as shown in Figure 1 and Figure 8, to accommodate a line of individual light sources 11, or else one or more cylindrical or otherwise elongate sources such as the fluorescent light bulb 20 of Figure 8. Alternatively, as shown in Figures 7, 9 and 10, the light-admitting surfaces are discontinuous along the edge, and are constituted by a row of separate, spaced recesses 19, for accommodating the separate light sources such as light-emitting diodes 11. In Figure 7, these are cylindrical wells with part-spherical bases, but other configurations are of course possible. In Figure 9, a sawtooth edge, and in Figure 10 a castellated edge, are produced by laser cutting, and provide the recesses 19 for at least partially accommodating the light sources. By causing the light source to overlap with or be partly embedded in the edge of the plate the amount of light entering the light-receiving surface is increased for a fixed light source output.

With any of these arrangements, a further advantage is possible with the use of resin fill. A transparent resin can be used to surround, locate and/or encapsulate the light source within the recess. This resin provides increased transmission of light from the light source into the panel through "wetting out" of the contact surfaces of the light source and the recess. The resin effectively bridges any space (air gaps) within the detail, for example in Figure 1 the contact surfaces of the machined channel 13, 14 and 15. In this case the light refraction caused by any machining marks in the contact surfaces would be minimised as a result of the clear resin's contact. The resin has the advantage of accommodating a variety of light source shapes when embedded into the channel whilst the resin is fluid. The solidification of the resin then serves to locate the light source.

One advantage of this arrangement is the economy of space in the peripheral area of the assembly. Another is the ease of assembly in manufacture.

The terms "inclined", "angled" and "recessed" used in this context are to be construed as having a very broad meaning. For example, each term, by itself, is intended to encompass all of the edge configurations shown in Figures 1 to 10 inclusive. That is to say, these terms cover edge profiles where some part of the edge deviates from a plane normal to the major surface of the plate. This definition is particularly intended to encompass the castellated configurations shown in Figures 9 and 10. In this case the edge of the plate deviates from the usual line of the edge of the rectilinear plate. The result of these design changes is such that the light receiving edge(s) of the plate are so sized, shaped and configured so as to have a total light receiving surface area greater than that of a plate with conventional square cut edges.

One important technical advantage of the edge configurations described above is that the light source can extend, in the plane of the plate, at least partly into the footprint or projected area of the major surface of the light-diffusive plate. That is to say, the plate and the light source(s) overlap or partly overlap. This saves space and causes more light to enter into the body of the plate.

The "footprint" or "projected area" is the notional area formed by scribing around the outermost edge periphery of the plate.

In the case of the castellated or serrated versions it includes the area between castellations and serrations.

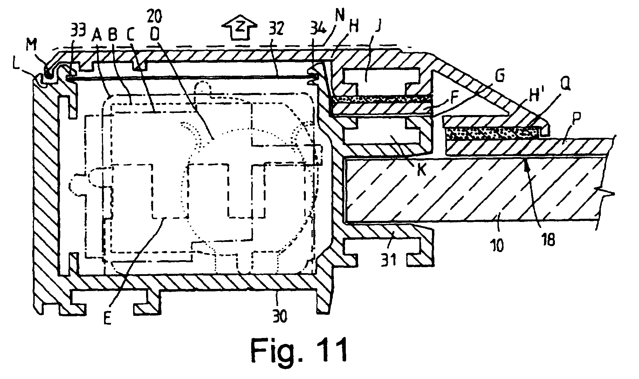

As shown in Figures 11 to 15, the light source or sources may be accommodated at least partly in a channel-section frame surrounding the back-plate or diffuser-plate 10. Normally, the illumination would be provided around one, two or all four sides of a rectangle, but more complex diffuser shapes, and partial illumination, are envisaged as possible.

An electrically edgelit display panel assembly needs to be accessible for maintenance and component replacement and for the changing of the image being displayed. Obviously, the space must be minimised for aesthetic and practical considerations, but at the same time consideration must be given to the security both of the image (a duratrans or lenticular image may represent one third of the value of the display unit) and of the live electrical components. A display unit of this nature will often be sited in the public arena and tamper proof features are important. A specific electrical security requirement is that access to the potentially live components can be achieved only with the use of a tool (BSEN50107 7.4(d) Luminaires) i.e. that entry by hand cannot be achieved.

These requirements are all met by the invention embodied in the example shown in Figures 11 to 15. An aluminium channel-shaped frame 30 has a rectangular-section mouth 31 for receiving an edge of the acrylic plate 10. The rectangular-section recess accommodates the potentially live electric components A to E as listed: the ballast A, the starter and base B, the inline fuse C, the fluorescent tube 20 or D and the tube clip, and the connector E. A removable screen 32 is slidingly received in notches 33 and 34 in the frame 30.

An aluminium elongate fascia panel H is removably attached over the frame 30 and functions both to close the open channel (over the screen 32) and to frame the image. The fascia panel H is formed with a channel J over which may be adhered an elongate magnetic strip F of magnetic self-adhesive tape. This connects removably and magnetically with a correspondingly positioned self-adhesive steel tape G over a channel K on the frame 30. By pulling in the direction shown by arrow Z, for example using a vacuum pad over the area labelled N, the fascia panel H may be removed from the frame.

A lip or nib M interengages with a channel-shaped recess L in the outer edge of the frame 30, to locate the fascia and frame together precisely and to prevent access without a special tool. This is shown schematically in Figure 11, and in practice the fit would be much closer, with very little space between formations L and M. This joint detail provides the necessary tamper proof quality for fascia retention. It should of course allow for the coating of the components with paint and/or powder.

Depending on the requirements for fascia retention, a lever tool may be provided for insertion into channel L to bear against the lip or nib M. For example, an engagement intended to be accessed by a 200-micron thick spring steel lever would prevent access by any objects commonly available to the public, such as car keys, credit cards, coins or paper clips.

The fascia panel H extends inwardly to a portion H' which is angled at about 30° to the plane of the plate 10. This inner extension serves both to frame the image substrate 18 which, in use, is held between a glazing panel P and the acrylic plate 10, and also to secure the glazing panel P to the fascia panel H, using glazing tape Q. Thus in this example the glazing panel P is framed by the fascia panel H to which it adheres with glazing tape Q, and this sub-assembly is removably connectable magnetically to the frame 30.

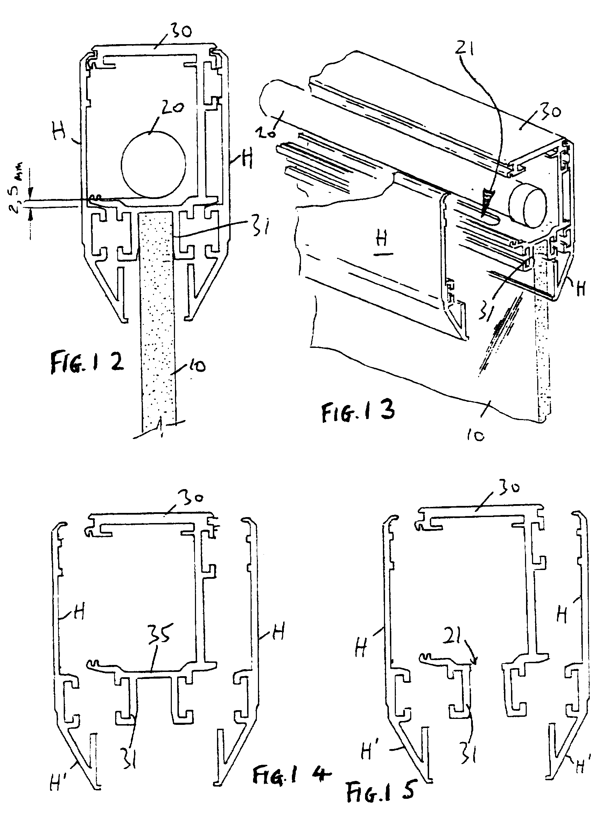

As shown in Figures 11 to 15, the frame 30 accommodates the cylindrical light source 20. As shown in Figure 12, the gap between the light source and the inner surface of the frame 30 adjacent the acrylic plate 10 is approximately 2.5 mm. An elongate slot 21 is cut into the frame 30, as shown in Figures 13 and 15, to allow light to reach the edge of the acrylic plate 10. At the corners of the panel assembly, the frame is solid, as shown at 35 in Figure 14, for the integrity of the frame.

In an alternative arrangement, as contemplated in Figures 1 to 10, the plate 10 may be formed along its edge so as to accommodate light sources, which would then not need to be accommodated in the frame itself, or which would need to extend only partly into the frame. This would then allow extra space for the electric components A to E, for example. By combining the various aspects of the present invention in this way, extra space could be saved, and the frame could be made more compact. However, of course, the separate inventions can of course be exploited independently.

Clearly a wide variety of different light sources could be used, for example high intensity LED's and LED's of different colours. Red, green, blue and yellow LED's could be combined to create white light, as white LED's are more expensive.

The acrylic back-plate may be of any type, such as "Altuglas-ELIT" (trade mark), which diffuses light through the surface when illuminated from the edge. Such acrylics contain clear embedded particles of different refractive index, to cause forward diffusion. "PLEXIGLAS GS Clear 1001" (trade mark) is a slightly-diffusing but almost absorption free cast acrylic (PMMA) with good light-guiding behaviour, and sheets of for example 3m x 2m x 8mm may be cut. They may be covered with a strongly diffusing white translucent PLEXIGLAS film or paper; strongly reflective material may be used on the opposite, rear surface, if only one surface needs to be used for display. The thickness of the acrylic sheet will be determined in part by the size and relative proportions of the display panel. Typically the thickness will be in the range of 3 mm - 12 mm but thinner or thicker panels may be used as determined by the materials specialist. The image may be in the form of a duratran, poster or lenticular 3D image, for example about 1 to 2m by 1 to 2m.

A wide variety of light sources can be used in these display panels. Once again, the optimum light source will be determined by the materials expert and by some trial and error. Suitable fluorescent tubes are provided by the TLD Aperture tube range manufactured by Philips (RTM).

The panel plate need not have a regular geometric shape such as the rectangle described above. It could be formed into a special shape such as the outline of a door key, to provide an edge-lit display for advertising a key-cutting service, for example. One or more such key-shaped plates would each have an edge shaped in accordance with the invention and edge-lit appropriately.

Displays are envisaged in which light sources such as LED's are switched on and off in sequence in banks, to illuminate different panels sequentially, e.g. the key-shaped panels described above. The sequence can suggest movement, as in a cartoon sequence.

### KEY TO FIGURE 11

- A.: Ballast
- B.: Starter and Base
- C.: In-line Fuse
- D.: Tube and Tube Clip
- E.: Connector
- F.: Foam Back Magnetic Tape
- G.: Steel Tape
- P.: Glazing Panel
- Q.: Glazing Tape

## Claims

1. An edgelit display panel assembly comprising a frame supporting a light-diffusive plate and an electric light source or sources disposed along and closely adjacent to at least one edge of that plate for illuminating the whole plate and transmitting light through a major surface of the plate within the frame in use, wherein at least the said one edge of the plate has a light-receiving surface that is inclined and/or that lies within a recess formed in the edge of the plate, such that the light receiving edge(s) of the plate are so sized, shaped and configured so as to have a total light receiving surface area greater than that of a plate with conventional square cut edges.

2. An assembly according to Claim 1, wherein the or each light source extends, in the plane of the plate, at least partly into the footprint or projected area of the major surface of the light-diffusive plate.

3. An edgelit display panel assembly comprising a frame supporting a light-diffusive plate and an electric light source or sources disposed along and closely adjacent to at least one edge of that plate for illuminating the whole plate and transmitting light through a major surface of the plate within the frame in use, wherein at least the said one edge of the plate has a light-receiving surface, and wherein the light source extends, in the plane of the plate, at least partly into the footprint or projected area of the major surface of the light-diffusive plate.

4. An assembly according to any preceding Claim, in which a light-receiving surface, viewed in cross-section, is angled with respect to the normal to the plane of the plate.

5. An assembly according to Claim 4, in which the said edge of the plate is bevelled on at least one side.

6. An assembly according to Claim 5, in which the edge is bevelled on two sides.

7. An assembly according to Claim 6, in which the two bevelled sides join at a line.

8. An assembly according to Claim 1 or 2 or 3, in which the said one edge of the plate is formed with a channel-shaped recess along the edge to provide the light-receiving surface.

9. An assembly according to Claim 8, in which the recess is rectangular in cross-section.

10. An assembly according to Claim 8, in which the recess is U-shaped in cross-section.

11. An assembly according to Claim 8, in which the recess is polygonal in cross-section, with two sides of the polygon parallel with the plane of the plate, and two sides angled thereto.

12. An assembly according to Claim 8, in which the recess is V-shaped, and is thus notch-shaped.

13. An assembly according to Claim 1 or 2 or 3 or 4, in which the light-receiving surface is discontinuous along the edge, being formed by separate, spaced recesses receiving separate light sources.

14. An assembly according to any preceding claim, in which the or each light source is a light-emitting diode.

15. An assembly according to any of Claims 1 to 13, in which the or each light source is a cold cathode tube.

16. An assembly according to any of Claims 8 to 12, in which the light source is a cylindrical fluorescent tube extending along the channel-shaped recess.

17. An assembly according to any of Claims 8 to 12, in which the light source is a cylindrical fluorescent tube extending parallel to the channel-shaped recess.

18. An assembly according to any of Claims 1 to 17 inclusive wherein the light diffusive plate is a light-diffusive back-plate, the back-plate arranged, in use, to bear an image for display;
at least one elongate portion of the frame comprising a hollow, open channel for accommodating, in use, electric circuit components for an electric light source for edge-lighting the back-plate;
a removable elongate fascia panel for closing the said open channel;
and an elongate magnet between the fascia panel and the frame for magnetically retaining the fascia panel against the frame such that it is removable by pulling it in a direction normal to the plane of the frame and back-plate assembly.

19. An assembly according to Claim 18, in which the fascia panel and frame each have edge channel formations which interengage to locate one against the other precisely and to prevent or resist their separation manually by levering with an inserted tool.

20. An assembly according to Claim 18 or 19, in which the magnet is an elongate strip adhered to the frame or to the fascia panel or to both.

21. An assembly according to Claim 18, 19 or 20, in which the fascia panel is shaped so as to extend inwardly in the plane of the assembly for framing the edge of an image-supporting substrate, overlying the back-plate.

22. An assembly according to Claim 21, in which the fascia panel has an elongate face, generally parallel to the plane of the assembly, for attachment, in use, to an edge of a glazing panel for covering the back-plate and superposed image-supporting substrate.

23. An assembly according to any of Claims 18 to 22, comprising a glazing panel attached to the fascia panel and connectable magnetically to the frame.

24. An assembly according to any preceding Claim, in which the space between the or each light source and the corresponding light-receiving surface of the edge of the light diffusive plate is filled or partly filled with a filler material.

25. An assembly according to any of Claims 8 to 14, in which the or each recess is filled or partly filled with a filler material.

26. An edgelit display panel assembly comprising a frame supporting a light-diffusive back-plate, the back-plate arranged, in use, to bear an image for display;
at least one elongate portion of the frame comprising a hollow, open channel for accommodating, in use, electric circuit components for an electric light source for edge-lighting the back-plate;
a removable elongate fascia panel for closing the said open channel;
and an elongate magnet between the fascia panel and the frame for magnetically retaining the fascia panel against the frame such that it is removable by pulling it normal to the plane of the frame and back-plate assembly.
